# EUROPÄISCHE PATENTANMELDUNG

(11) **EP 0 942 182 A1**
(43) Veröffentlichungstag der Anmeldung: **15.09.1999**
(21) Anmeldenummer: 98810203.4
(22) Anmeldetag: 10.03.1998
(51) Int. Cl.: F16B 37/08

(54) **Gegenstück zu einer Schraube, insbesondere Mutter, Rohrschelle und Dübel**

(71) Anmelder: Cava AG, 7130 Ilanz (CH)
(72) Erfinder: Cavegn, Franco, 7144 Vella (CH)
(74) Vertreter: Riederer, Conrad A., Dr.

(57) **Zusammenfassung**

Eine Mutter (11b) zu einer Schraube weist zwei Backen (13b,15b) auf, welche je mit einem Scharnier (21b,23b) an einem Ringteil schwenkbeweglich befestigt sind. Eine Schraube kann daher von der Ringteilseite (49) her leicht in die Mutter (11b) hineingestossen werden, wobei die Backen (13b,15b) auseinanderweichen (gestrichelte Darstellung) und eine vergrösserte Öffnung (17b) freigeben, durch welche das Gewinde der Schraube hindurchgestossen werden kann. Beim Zurückziehen oder Anziehen der Schraube werden die Backen (13b,15b) gegeneinander verschwenkt und nehmen Eingriff in das Gewinde der Schraube. Eine solche Mutter (11b) kann sehr vielfältig verwendet werden, wobei jeweils die Schraube bis nahe an die gewünschte Verschraubungstiefe in die Mutter (11b) eingesteckt werden kann und lediglich nachgezogen werden muss. Die Verwendung einer solchen Aufsteckmutter (11b) ist insbesondere bei Rohrschellen oder auch Möbelfüssen zweckmässig. Auch auf Dübel lässt sich dieses Prinzip anwenden.

## Beschreibung

### Technisches Gebiet der Erfindung

Die vorliegende Erfindung betrifft ein Gegenstück zu einer Schraube, insbesondere Mutter, mit einer Öffnung für den Gewindeabschnitt der Schraube. Die Erfindung betrifft auch einen Dübel und eine Rohrschelle.

### Aufgabe der Erfindung

In vielen Situationen ist es erwünscht, dass eine Schraubenverbindung ohne Einschrauben einer Schraube bereits genügend Halt bietet, um die aneinander zu befestigenden Teile provisorisch zusammenhalten. Dies ist insbesondere dort der Fall, wo ein Gegenstand in einer bestimmten Position gehalten werden muss, bis die Schraubenverbindung genügend angezogen ist. Wünschenswert ist auch, dass die Schraube gleich in eine Position gebracht werden kann, welche der Position nach Anziehen der Schraube nahekommt, so dass sie mit einigen wenigen Umdrehungen angezogen ist.

Es ist deshalb Aufgabe der Erfindung ein Gegenstück zu einer Schraube, insbesondere eine Mutter, mit einer Öffnung für den Gewindeabschnitt der Schraube, einen Dübel oder eine Rohrschelle mit einem entsprechenden Gegenstück zu einer Schraube zu schaffen, in dessen Öffnung eine Schraube einsteckbar ist und nach dem Einstecken sofort Halt findet. Die Schraube soll ausserdem beliebig tief einsteckbar, jedoch nicht mehr aus dem Gegenstück herausziehbar sein.

### Beschreibung der Erfindung

Bei einem Gegenstück der erwähnten Gattung wird dies erfindungsgemäss dadurch erreicht, dass das Gegenstück wenigstens zwei Backen aufweist, welche zusammen die Öffnung bilden, dass die Backen mit einem Ringteil auf einer Öffnungsseite verbunden sind, und dass die Backen verschwenkbar sind.

Beim Einstecken einer Schraube stösst deren Vorderkante gegen den Rand der Öffnung. Die Backen weichen daraufhin mit einer Schwenkbewegung um die Schwenkachse auseinander bis die Öffnung so weit ist, dass die Schraube hindurch gestossen werden kann.

Vorteilhaft ist beim Anziehen einer von der Ringteilseite in die Öffnung eingeführten Schraube der Vektor der von der Schraube auf eine Backe wirkenden Kraft mit Abstand zur Schwenkachse auf der Seite der Öffnung an der Schwenkachse vorbei gerichtet, so dass die Kraft einer die Öffnung vergrössernden Verschwenkung der Backen entgegenwirkt. Dadurch werden beim Anziehen der Schraube die Backen zusammengezogen, denn der Vektor der von der Schraube auf das Gegenstück wirkenden Kraft verläuft auf der Innenseite der Drehachse und verdreht daher die Backe zur Schraube hin.

Vorteilhaft umfasst das Ringteil das ringteilseitige Ende der Backen und/oder die Backen sitzen mit einem konischen Teil in einem Konus im Ringteil. Die parallel zur Achse der Öffnung auftretende Komponente der Kraft auf das Gegenstück kann über eine ebene Auflagefläche des Gegenstücks abgetragen werden. Die Kräfte, welche die Backen auseinandertreiben werden vorteilhaft durch das Ringteil aufgefangen. Dazu ist vorteilhaft eine Auflagefläche zwischen Ringteil und Backen geschaffen, welche konisch ist und daher die Backen zentriert, und/oder das Ringteil ist die Backen an einem Ende so umfassend ausgebildet, dass zwar die Schwenkbewegung möglich bleibt, bei Auseinanderweichen der Backen diese aber am Ringteil anstossen.

Vorteilhaft ist ein Scharnier zwischen dem Ringteil und den Backen oder im Ringteil angeordnet. Unter Scharnier ist hier eine Stelle verstanden, welche die gewünschte Schwenkbewegung erlaubt. Darunter fallen insbesondere Bandscharniere, Filmscharniere oder auch flexible Stellen in einer Halterung der Backen. Die Schwenkachse der Backen liegt daher nicht unbedingt im Scharnierteil.

Mit Vorteil für die Herstellung, insbesondere bei Kunststoffteilen, ist das die Schwenkbewegung erlaubende Scharnier ein Bandscharnier oder ein Filmscharnier. Bei Kunststoffteilen sind die Backen, das Scharnier und das Ringteil vorteilhaft einteilig hergestellt.

Alternativ kann jedoch auch das Gegenstück aus wenigsten zwei Backenteilen und einem Ringteil zusammengestellt sein, und zwischen dem Ringteil und den Backen oder im Ringteil Scharniere ausgebildet sein. Eine solche Konstruktion ermöglicht die Verwendung verschiedener Materialien an einem Gegenstück.

In gewissen Fällen ist es vorteilhaft, wenn das Ringteil Teil eines zu befestigenden Gegenstandes ist und die Backen direkt am Gegenstand befestigt sind. Die Backen können einzeln über Scharniere an einem Gegenstand befestigt sein, welcher den Zusammenhalt bzw. die Positionierung der Backen gewährleistet und alle Kräfte aufnimmt.

In gewissen Fällen ist es Zweckmässig, die Öffnung nicht mit einem Gewinde auszurüsten. Dann entspricht der Innendurchmesser der Öffnung vorteilhaft etwa dem Gewindekern der Schraube und bestehen die Backen zweckmässigerweise aus einem Material, in welches mit einer Schraube das Innengewinde geschnitten werden kann. In den meisten Fällen jedoch ist die Öffnung zweckmässigerweise mit einem Innengewinde versehen, welches auf die einzuschraubende Schraube abgestimmt ist.

Vorteilhaft sind Federmittel an den Backen angeordnet, welche die Backen zur Achse der Öffnung drücken. Diese Federmittel können beispielsweise federnde Bandscharniere oder auch ein O-Ring aus elastischem Material um die Backen herum sein.

Bei einem erfindungsgemässen Dübel mit einem durch Anziehen einer Schraube im Dübel spreizbaren Spreizteil ist ein Gegenstück nach einem der Ansprüche 1 bis 10 vorgesehen, in welches Gegenstück zum Spreizen des Dübels eine Schraube einschraubbar ist. Eine Schraube braucht in einen solchen Dübel lediglich eingesteckt werden, und schon rasten die Backen des Gegenstücks im Gewinde der Schraube ein. Will der Dübel im Mauerloch verklemmt werden, muss lediglich an der Schraube gezogen werden, während der Dübel am Austreten aus dem Mauerloch gehindert wird. Ein Festschrauben der Schraube kann später geschehen.

Ist das Spreizteil am Ringteil gegenüber den Backen angeordnet, so wird es beim Anziehen der Schraube in der Länge gestaucht. Teile des Spreizteiles weichen daher seitlich aus, wodurch der Dübel das Mauerloch, in dem er steckt, ausfüllt. Ein solcher Dübel ist auch geeignet, an Verkleidungen mit dahinterliegenden Hohlräumen Halt zu finden. Ist alternativ dazu das Spreizteil um das Gegenstück herum und das Gegenstück darin verschieblich angeordnet, und weist die Wandung des Spreizteils eine in einer Richtung zunehmende Dicke auf, so dass beim Anziehen einer Schraube im Dübel das Gegenstück sich in den Bereich mit dickerer Wandung verschiebt, wird durch diese Verschiebung der Dübel im Mauerloch verklemmt.

Bei einer erfindungsgemässen Rohrschelle mit einem z.B. an einer Wand befestigbaren Basisteil und einem mit diesem verschraubbaren Klemmteil, ist ein Gegenstück gemäss einem der Ansprüche 1 bis 10 vorgesehen, welches mit einer Schraube zusammenwirkt. Vorteilhaft ist das Gegenstück am Basisteil oder Klemmteil angeordnet. Eine solche Rohrschelle kann dadurch einhändig geschlossen werden, indem Schraube und Gegenstück zusammengestossen werden. Die zweite Hand kann dabei gleichzeitig das Rohr an Ort und Stelle halten.

Vorteilhaft ist am Ringteil des Gegenstücks ein Fortsatz zum Einstecken in ein entsprechendes Loch im Basis- oder Klemmteil ausgebildet, wobei der Fortsatz und das Loch Umrisse aufweisen, welche Drehkräfte um die Achse der Öffnung auf das Basisteil übertragen. Dadurch verdreht sich das Gegenstück beim Anziehen der Schraube nicht.

### Kurzbeschrieb der Figuren

Die Erfindung wird nun anhand von Ausführungsbeispielen noch genauer ausgeführt. Es zeigt:
- Fig. 1: eine perspektivische Skizze eines erfindungsgemässen Gegenstücks zu einer Schraube, mit unter den Backen angeordneten Bandscharnieren und darunter dem Ringstück,
- Fig. 2: eine perspektivische Skizze eines erfindungsgemässen Gegenstücks zu einer Schraube, mit neben den Backen angeordneten Bandscharnieren und dem Ringstück um die Backen herum,
- Fig. 3: eine perspektivische Skizze eines Gegenstücks wie in Figur 2 dargestellt, jedoch mit drei anstatt zwei Backen,
- Fig. 4: einen Schnitt durch das Gegenstück gemäss Figur 1,
- Fig. 5: einen Schnitt durch ein Gegenstück gemäss Figur 2,
- Fig. 6: einen Schnitt durch ein Gegenstück, bei welchem die Backen einzeln an einem Ringteil befestigt sind, welches durch ein zu befestigendes Teil gebildet ist,
- Fig. 7: einen Schnitt durch eine Variante zum Gegenstück gem. Figur 2 und 5, bei welchem zwei Metallbacken mit dem Gewinde in einem Kunststoffteil mit Scharnier und Ringteil sitzen,
- Fig. 8: einen Schnitt durch ein Gegenstück mit Metallbacken in einem flexiblen Halterteil,
- Fig. 9: einen Schnitt durch ein Gegenstück in der Art des Gegenstücks aus Figur 1 und 4, jedoch in Metall ausgeführt,
- Fig. 10: einen Schnitt durch ein Gegenstück mit Konisch ausgebildetem Ringteil in der Verlängerung der Backen,
- Fig. 11: eine Aufsicht auf eine Rohrschelle, wobei links und rechts am Klemmteil zwei unterschiedlichen Ausführungsvarianten der Anordnung des Gegenstücks dargestellt sind,
- Fig. 12: eine Seitenansicht eines Dübels mit einem erfindungsgemässen Gegenstück als Spitze,
- Fig. 13: eine Ansicht des Dübels gemäss Figur 12, jedoch in senkrecht dazu ausgerichteter Blickrichtung,
- Fig. 14: den Dübel gemäss Figur 12 und 13 in einer Verkleidungsplatte mit eingerasteter Schraube,
- Fig. 15: den Dübel gemäss Figur 14 nach dem Anziehen der Schraube,
- Fig. 16: einen Schnitt durch einen Dübel mit im Innern des Dübelmantels gleitendem Gegenstück,
- Fig. 17: den Dübel gemäss Figur 16 in einem Mauerloch mit eingerasteter Schraube,
- Fig. 18: den Dübel gemäss Figur 17 mit angezogener Schraube.

### Beschrieb der Ausführungsbeispiele

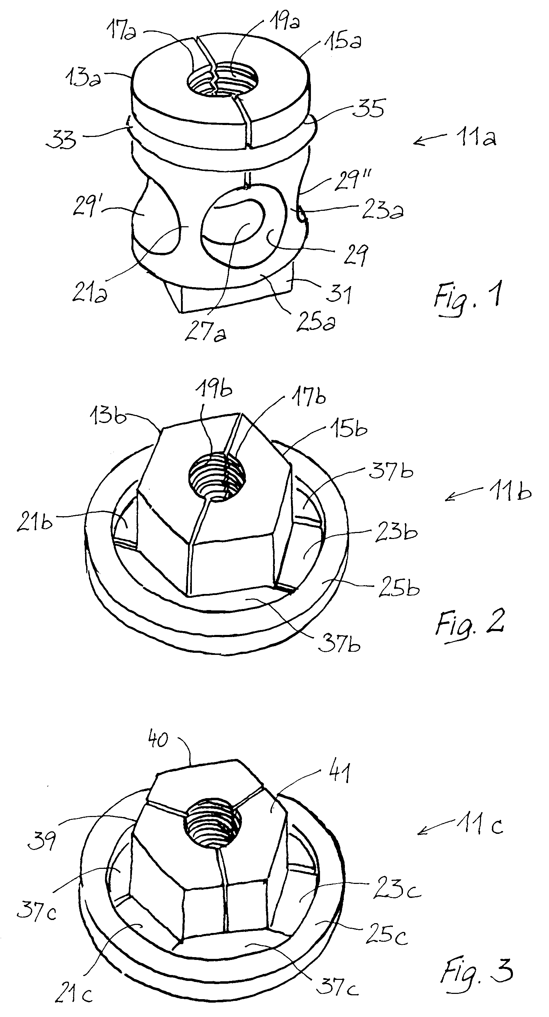

In Figur 1 ist ein Gegenstück 11a dargestellt, welches aus einem Kunststoffstab geschnitten ist, oder alternativ dazu auch mittels Spritzguss hergestellt sein kann. Es weist zwei Backen 13a und 15a auf, welche zusammen eine Öffnung 17a mit einem Innengewinde 19a umfassen. Die beiden Backen 13a und 15a sind über Bandscharniere bzw. federnde Stege 21a,23a mit einem Ringteil 25a verbunden. Im Ringteil 25a ist in der Achse der Öffnung 17a eine Öffnung 27 gebohrt. Die beiden Stege 21a und 23a sind gebildet durch eine Bohrung 29 senkrecht zur Achse der Öffnungen 17a und 27 und zwei Bohrungen 29', 29'' parallel dazu, zwischen welchen Bohrungen 29,29',29'' jeweils eine Wandung mit angemessener Stärke stehenbleibt. Am Ringteil 25a ist ein vierkantiger Fortsatz 31 ausgebildet, mit welchem das Gegenstück 11a in einem viereckigen Loch in einem zu befestigenden Teil verdrehsicher einsteckbar ist. Die beiden Backen 21a und 23a sind von einem elastischen O-Ring 33 umspannt, welcher in einer Ringnut 35 sitzt. Die Stege 21a und 23a werden beim Anziehen der mit dem Gegenstück 11a zusammenwirkenden Schraube unter Druck gesetzt. Sie übertragen den Druck auf das Ringteil 25a, und dieses auf das zu befestigende Teil.

Anders ist dies im Ausführungsbeispiel 11b in Figur 2. Die Backen 13b und 15b ühertragen den Druck einer angezogenen Schraube direkt auf das zu befestigende Teil. Das Ringteil 25b ist um die Backen 13b,15b herum angeordnet und nicht unter diesen. Dank der Sechskantform der Mutter 11b kann diese auch mit einem Schraubenschlüssel auf eine feststehende Schraube aufgeschraubt werden. Zwischen den Backen 13b,15b und dem Ringteil sind Bandscharniere 21b,23b ausgeformt. Diese wirken als Federn, und drücken die Backen 13b,15b gegen die gezeigte Grundstellung, in welcher das Gewinde 19b bzw. die Öffnung 17b die der Schraube entsprechende Weite aufweist. Am Ringteil 25b ist ein Rand 37 ausgebildet, welcher den Backen 13b,15b einen minimalen Spielraum lässt. Die Backen können dadurch wohl verschwenkt werden, aber nur minimal auseinanderweichen.

Figur 3 zeigt ein der Mutter 11b entsprechendes Gegenstück 11c, welches jedoch drei Backen 39,40,41 aufweist. Diese sind über Bandscharniere 21c,22c,23c mit dem Ringteil 25c verbunden.

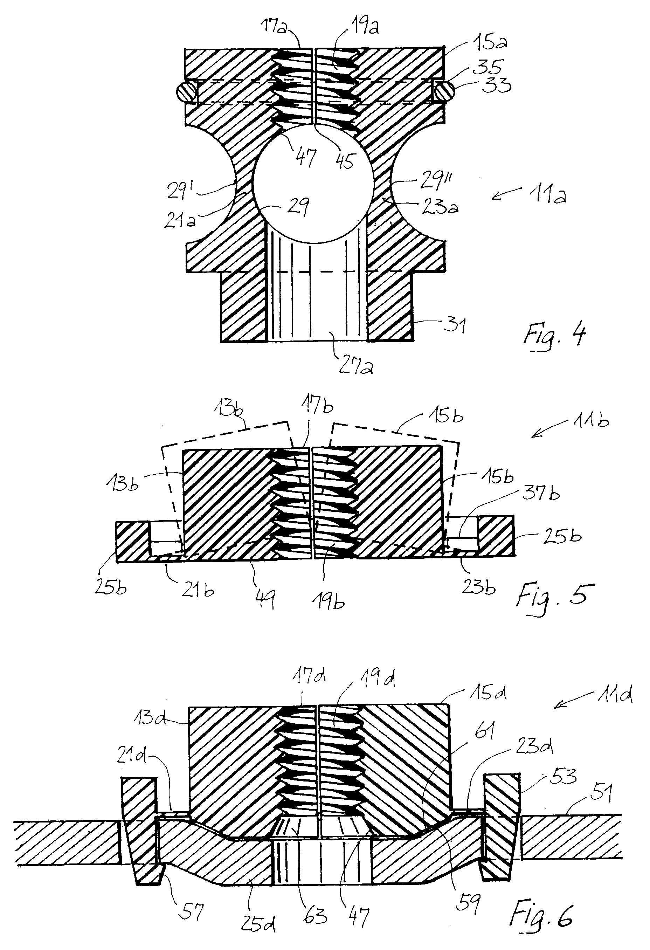

Figur 4 ist ein Schnitt durch das Gegenstück 11a senkrecht zum Schlitz 45 zwischen den beiden Backen 13a,15a. Die Öffnung 27 ist weiter als die Öffnung 17a mit dem Gewinde 19a. Das Gewinde einer mit dem Innengewinde 19a zusammenwirkenden Schraube kann deshalb leicht durch die Öffnung 27 gesteckt werden und steht erst am inneren Rand 47 der Öffnung 17a an. Die Backen 13a,15a werden bei weitergehendem Einstecken der Schraube durch die Schraube weggedrängt und dadurch in den Bandscharnieren 21a,23a verschwenkt. Durch die Federkraft in den Bandscharnieren und im O-Ring 33 werden die Backen nach jedem Eindringen der Schraube um einen weiteren Gewindeumgang wieder in Eingriff mit dem Schraubengewinde gebracht.

Beim Zurückziehen oder Anziehen der Schraube jedoch wirkt eine Kraft auf die Backen, deren Vektor nahezu parallel zur Achse der Öffnung ist. Die Backen 13a,15a werden durch diese Kraft gegeneinander verschwenkt. Je grösser der Abstand zwischen der Schwenkachse und dem Vektor dieser Kraft ist, desto grösser kann auch die Anzugskraft der Schraube sein.

Figur 5 zeigt einen Schnitt senkrecht zum Schlitz 45 zwischen den beiden Backen 13b,15b der Mutter 11b aus Figur 2. Die Backen verschwenken bei Einstecken einer Schraube von der Ringteilseite 49 her in der Einsteckrichtung und nach Aussen (gestrichelt eingezeichnet). Der Schlitz 45 wird dadurch aufgeweitet und die Öffnung genug gross, um die Schraube durch das Gewinde 19b hindurch zu stossen. Sobald der Druck auf den ringteilseitigen Rand 47 der Öffnung 17b nachlässt, fallen die beiden Backen 13b,15b zurück und sind in Eingriff mit dem Gewinde der Schraube. Ein Zug auf die Schraube bewirkt auch hier das Anpressen der Backen 13b,15b an die Schraube, da der Vektor der Kraft in Zugrichtung zwischen Schraube und Schwenkachse der Backen hindurch verläuft und die Backen für eine Verschwenkung in dieser Richtung zumindest an ihrem schwenkachsfernen Ende gegeneinander geführt werden müssten. Bei erhöhtem Druck durch Anziehen der Schraube entwickeln sich Kräfte quer zur Zugrichtung der Schraube, denn die Backen können nur gegen aussen ausweichen. Da die Backen 13b,15b schon nach einer kleinen Ausweichbewegung am Rand 37b anstehen, werden diese Querkräfte z.T. durch den Rand 37b und das Ringteil 25b aufgenommen.

Die Backen 13a,b, und 15a,b sind einstückig mit dem Ringteil 25a,b und den Bandscharnieren 21a,b und 23a,b hergestellt. Sie können aber auch als zwei Einzelteile 13d,15d an einem das Ringteil bildenden Teil 51 befestigt sein. Figur 6 zeigt einen Schnitt durch eine entsprechend Mutter 11d. Die beiden Backen 13d,15d sind grundsätzlich unzusammenhängend, wenn sie vielleicht auch, z.B. aus verfahrenstechnischen Gründen, mit durchreissbaren Verbindungsteilen zusammenhängend hergestellt sind. Eine solche Mutter 11d arbeitet analog zur Mutter 11b. Die Funktion des Ringteiles 25 übernimmt das zu befestigende Teil 51 selber. Die Backen 13d,15d sind mit Bandscharnieren 21d,23d an Befestigungsteilen 53 angeordnet. Die Befestigungsteile sind in Löcher 55 im Teil 51 einsteckbar und sitzen dank hinter der Wandung des Teiles 51 einhakenden Haken 57 druckknopfartig darin fest. In ein Teil 51 mit einer entsprechenden Lochung 55 ist die Mutter 11d einsteckbar und hält darin ohne weitere Befestigung.

In Figur 6 ist zudem eine konische Fläche 59 am Ringteil 25d bzw. des Teiles 51 dargestellt, mit welcher im Zusammenhang mit einer entsprechend konischen Ausformung 61 an der Mutter 11d ein Auseinanderweichen der Backen 13d,15d verhindert oder zumindest behindert wird. Der Winkel des Konus ist dabei mit Vorteil steiler als er Winkel der Gewindezahnung. In der Figur 6 ist der Konuswinkel jedoch flacher gezeichnet, weshalb die Mutter 11d lediglich eine kleinere Querkraft aufnehmen kann, als wenn dieser Winkel steiler wäre. Während der Verschwenkung der Backen 13d,15d bewegt sich der unterste Rand 47 der Öffnung 17d in einem Kreis um die Schwenkachse etwa im Zentrum der Bandscharniere 21d,23d. Da die Scharniere in Einsteckrichtung der Schraube hinter dem Rand 47 der Öffnung liegen, bewegt dieser Rand sich zuerst gegen die Achse der Öffnung hin. Der unterste Teil 63 der Öffnung 17d ist konisch und so gross ausgebildet, dass die am Innengewinde 19d anstehende Schraube auch während der Verschwenkung der Backen 13d,15d durch den Rand 47 nicht eingeklemmt wird.

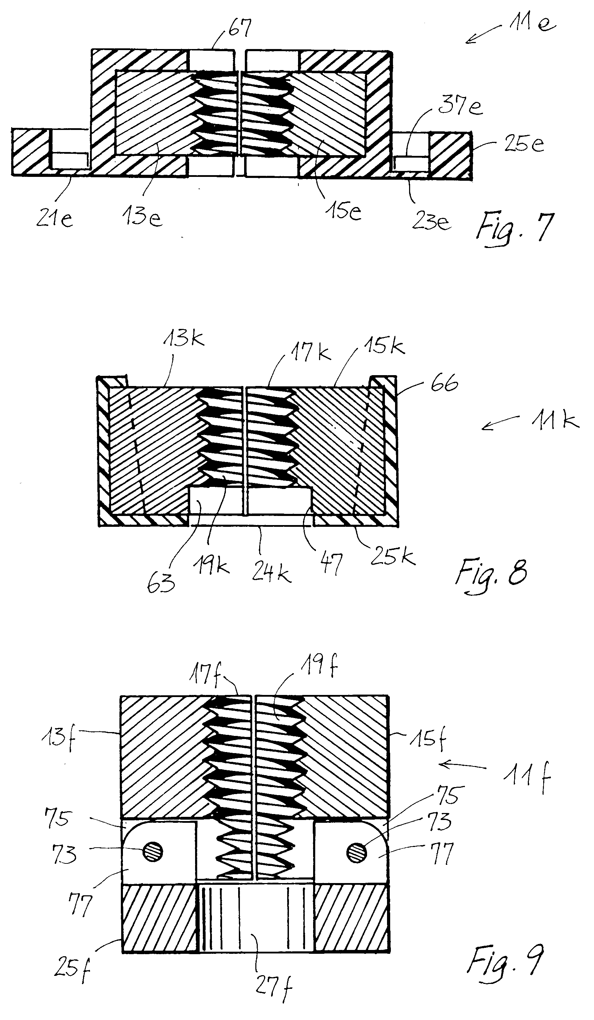

In Figur 7 ist eine Mutter 11e dargestellt, welche im Wesentlichen der Mutter 11b aus Figur 2 und 5 entspricht, jedoch nicht wie diese ganz aus Kunststoff hergestellt ist. Die Mutter 11e besteht aus einem Grundteil 65 mit einer Halterung 67 für zwei Metallbacken 13e und 15e. Am Grundteil 65 aus Kunststoff sind die Bandscharniere 21e und 23e und das Ringteil 25e ausgebildet.

Figur 8 zeigt eine Mutter 11k mit zwei metallenen Backen 13k,15k in einem Halteteil 66. Das Halteteil weist ein federnder oder zumindest flexibles Ringteil 25k unter den Backen auf. Die Stellen 24k sind flexibel, so dass die beiden Backen 13k,15k auseinanderschwenken, wenn eine Schraube vom Ringteil 25k her in die Mutter 11k eingestossen wird. Damit die Öffnung 17k beim Einstossen der Schraube auch ringteilseitig genügend weit wird, beginnt das Gewinde 19k erst mit Abstand vom Ringteil 25k und die Öffnung 17k in den Backen 13k,15k ist im unteren Bereich 63 ausgeweitet. Vorteilhaft an diesem Scharnier 24k unter den Backen bzw. zwischen den Backen 13k,15k und einem zu befestigenden Gegenstand ist, dass beim Anziehen der Schraube die beiden Backen 13k,15k die Beweglichkeit des Scharniers blockieren.

In ähnlicher Art wie in Figur 7 und 8 könnte auch ein Grundteil 65' oder Halteteil 66' aus einem federnden Metall hergestellt sein, in welches zwei Backen einsetzbar sind.

Figur 9 zeigt eine Mutter 11f, welche ganz aus Metall gefertigt ist. Die Scharniere 71,72 zwischen den Backen 13f, 15f und dem Ringteil 25f weisen je eine Achse 73 auf. Die Backen 13f,15f weisen eine Ausnehmung 75 auf, in welche ein Fortsatz 77 am Ringteil hineinreicht. Die Achsen 73 durchdringen je sowohl einen dieser Fortsätze 77 als auch je eine Backe 13f bzw. 15f. Die Backen 13f,15f werden beim Einführen einer Schraube in die Öffnung 17f von der Öffnung 27f im Ringteil her auseinandergedrängt. Damit die Backen 13f und 15f in Eingriff mit dem Gewinde der eingeführten Schraube gelangen, müssen die Backen 13f,15f von Hand zusammengedrückt werden. Alternativ kann jedoch ein O-Ring in einer Ringnut angeordnet werden, wie dies in Figur 1 und 3 beim Gegenstück 11a dargestellt ist.

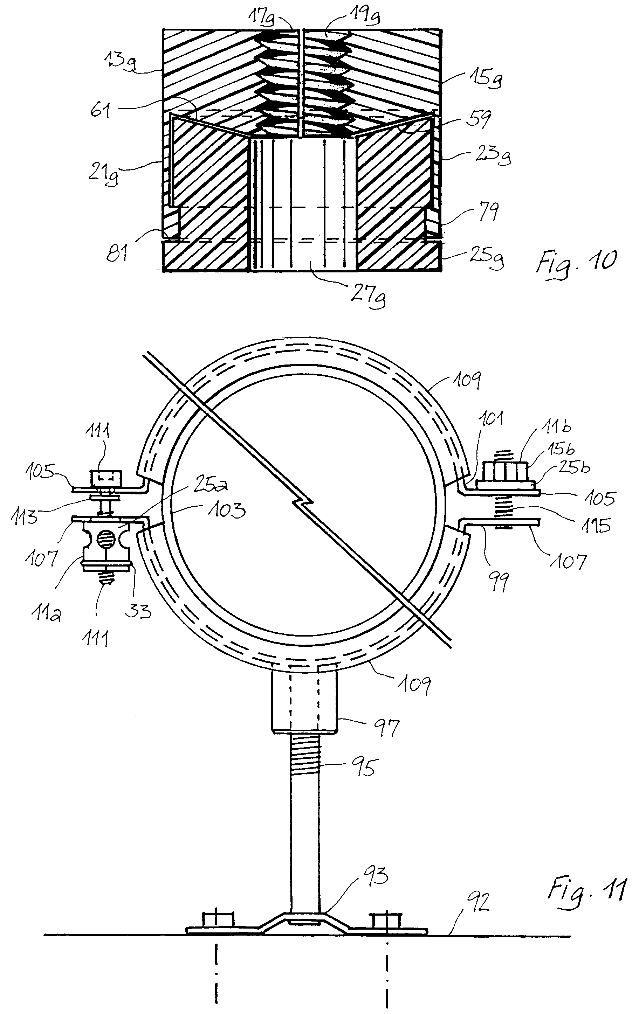

Figur 10 zeigt eine weitere Mutter 11g im Schnitt. Die Backen 13g und 15g sind aus Kunststoff und mit Bandscharnieren 21g und 23g an einem Befestigungsring 79 angeordnet. Der Befestigungsring 79 sitzt in einer Nut 81 auf einem Ringteil 25g, welches zwischen den Backen und einem zu befestigenden Teil angeordnet ist, bzw. bei Verwendung des Gegenstücks 11g zur Befestigung eines Teiles diesem zugewandt sein muss. Die Funktion der Backen ist wie in den vorangegangen Ausführungsbeispielen auch durch die Geometrie zwischen den beweglichen Backen 13g,15g, deren Abstand zu ihrer Schwenkachse und die Einführungsrichtung einer mit den Backen 13g,15g zusammenwirkenden Schraube gegeben.

Die Mutter 11g weist wie die Mutter 11d (Figur 6) ein konisch ausgebildetes Ringteil 25g auf. Die konische Fläche 59 am Ringteil 25g wirkt zusammen mit einer konischen Fläche 61 an den Backen 13g,15g. Durch die nach innen in Zugrichtung einer Schraube konisch zulaufende Form der Auflagefläche wird einem Auseinandergleiten der Backen unter dem Druck der Schraube entgegengewirkt. Wiederum ist festzustellen, dass ein steilerer Konus 59,61 eine grössere Querkraft aufnehmen kann. Dabei ist lediglich zu berücksichtigen, dass die Schwenkbewegung beim Einführen einer Schraube durch den Konus nicht behindert werden sollte.

Eine solche Mutter 11 kann verschiedentlich eingesetzt werden. So ist sie z.B. in einem Möbelfuss integrierbar, wodurch ein verstellbarer Fuss mit einem Aussengewinde aus der Mutter 11 herausziehbar ist und in der gewünschten Auszugdistanz unter Last mit dem Aussengewinde in das Innengewinde 19 eingreift. Danach ist der Fuss ohne Aufwand weiter ausziehbar oder aber durch Drehen des ausziehbaren Fusses oder der Mutter justierbar. Ebenso ist eine Mutter 11 z.B. in einer Duschvorhangstange zweckmässig verwendbar. Diese ist durch die Verwendung einer solchen Aufsteckmutter 11 auf die gewünschte Länge vor Ort ausziehbar und durch Verdrehen von einem gegenüber dem andern Teil der Vorhangstange festklemmbar.

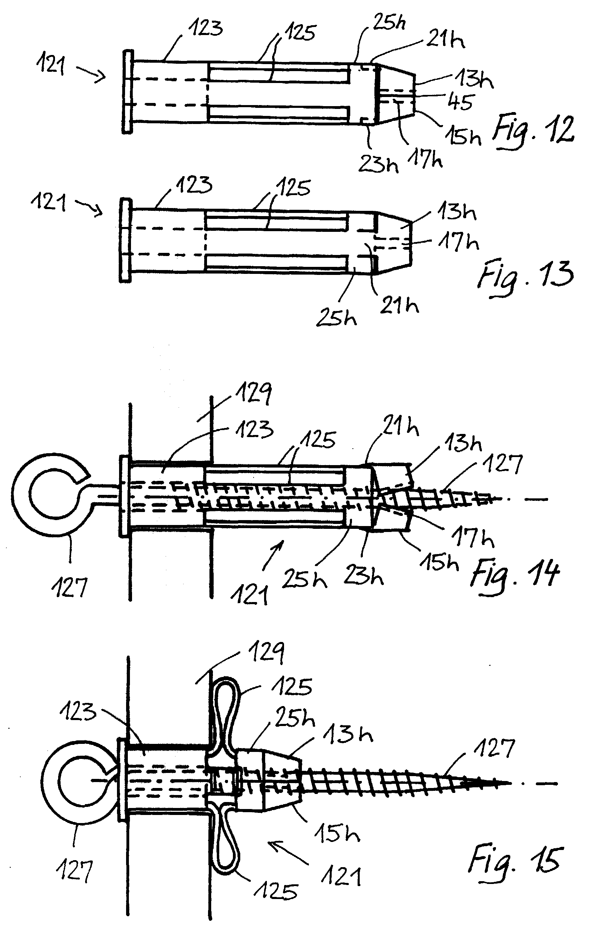

Insbesondere sind jedoch Vorrichtungen von Interesse, bei denen durch den Einsatz einer Aufsteckmutter 11 ein Mann allein die Arbeit machen kann, wo vorher mit Vorteil zu zweit gearbeitet werden musste. Dies ist beispielsweise der Fall bei einer Rohrschelle gemäss Figur 11.

Bei dieser Rohrschelle 91 sind an Stelle von gewöhnlichen Muttern Aufsteckmuttern 11 verwendet. Links und rechts an der Rohrschelle 91 sind zwei Varianten dargestellt. Die Rohrschelle 91 besteht aus einem an einer Wand 92 oder Decke befestigbaren Fuss 93 mit einem Gewindestab 95. Der Gewindestab 95 ist in eine Gewindehülse 97 eingeschraubt, welche ihrerseits an einem Basisteil 99 festgeschweisst ist. Das Basisteil 99 ist halbrund geformt. Mit einem ebenfalls halbrund geformten Klemmteil 101 zusammen umfasst es ein Rohr 103. Basisteil 99 und Klemmteil 101 sind an Laschen 105,107 zusammengeschraubt, wobei zwischen den Laschen 105,107 ein Zwischenraum offengelassen ist, welcher ein Einklemmen des Rohres 103 zwischen den beiden Teilen 99 und 101 erlaubt. Die halbrunden Teile 99 und 101 sind mit einem Gummiprofil 109 bestückt, welches dem Rohr 103 rutschfesten Halt und gleichzeitig etwas Bewegungsspielraum gibt.

Links ist nun eine Variante einer Schraubenverbindung mit einer Aufsteckmutter 11a dargestellt. Die Mutter 11a ist an der Lasche 107 am Basisteil 99 festgeleimt oder festgeklemmt. Eine Schraube 111 ist durch ein Loch in der Lasche 105 am Klemmteil 101 geführt und in die Aufsteckmutter 11a eingesteckt. Damit die Schraube 111 nicht aus dem Loch herausfallen kann, während jemand das Klemmteil 101 auf das Basisteil 99 steckt und dabei das Rohr 103 an seinem Ort hält, ist an der Schraube ein Ring 113 , z.B. aus Gummi, aufgesetzt. Der Ring 113 hat eine Öffnung, welche nur mit Kraftaufwand über das Gewinde der Schraube 111 geschoben werden kann. Durch die Anordnung eines solchen Ringes 113 kann die Schraube locker im Loch in der Lasche 105 sitzen und verklemmt bei der Montage des Klemmteiles 101 nicht so rasch.

Eine Variante dazu ist auf der rechten Seite der Figur 11 dargestellt. Hier ist die Schraube 115 fest an der Lasche 107 am Basisteil befestigt. Das Klemmteil 101 kann in diesem Fall über die Schraube 115 gesteckt werden und mit einer Aufsteckmutter 11b festgehalten werden. In beiden Fallen kann nachträglich die Rohrschelle angezogen werden, in dem die Schraube 111 bzw. die Mutter 11b nachgezogen wird.

In Figur 12 bis 15 ist ein Hohlraumdübel 121 dargestellt. Figur 13 zeigt den Dübel 121 aus Figur 12 von der Seite. Der Dübel 121 ist einstückig aus Kunststoff gefertigt. Er weist ein Führungsrohr 123 auf, von welchem in Längsrichtung vier Bänder 125 weggehen. Dies Bänder 125 sind an ihrem gegenüberliegenden Ende mit einem Ringteil 25h zusammengefasst, an welchem Bandscharniere 21h und 23h und daran die Backen 13h bzw. 15h angeordnet sind. Die Backen 13h und 15h bilden zwischen sich eine Öffnung 17h, welche nicht mit einem Gewinde versehen sein muss.

Wird eine Schraube 127, wie in Figur 14 dargestellt, in den Dübel 121 eingesteckt, werden durch die Schraube 127 die beiden Backen 13h und 15h auseinandergespreizt. Durch Ziehen an der Schraube 127 oder Einschrauben der Schraube 127 wird das Gewinde in das weiche Material der Backen 13h,15h eingepresst. Durch Anziehen der Schraube wird ein Gewinde in die Backen geschnitten oder gepresst, da die Backen 13h,15h durch den Zug zusammengetrieben werden. Dabei bewegt sich das Ringteil 25h mit den Backen 13h,15h gegen das Führungsrohr 123 und die Bänder 125 werden zusammengelegt. Die Bänder wölben sich durch die Verkürzung der Distanz zwischen dem Ringteil 25h und dem Führungsrohr 123 auf und bilden einen Rückhalt hinter einer Platte 129, in welcher das Führungsrohr 123 steckt. In ähnlicher Art ist auch ein Mauerwerksdübel möglich.

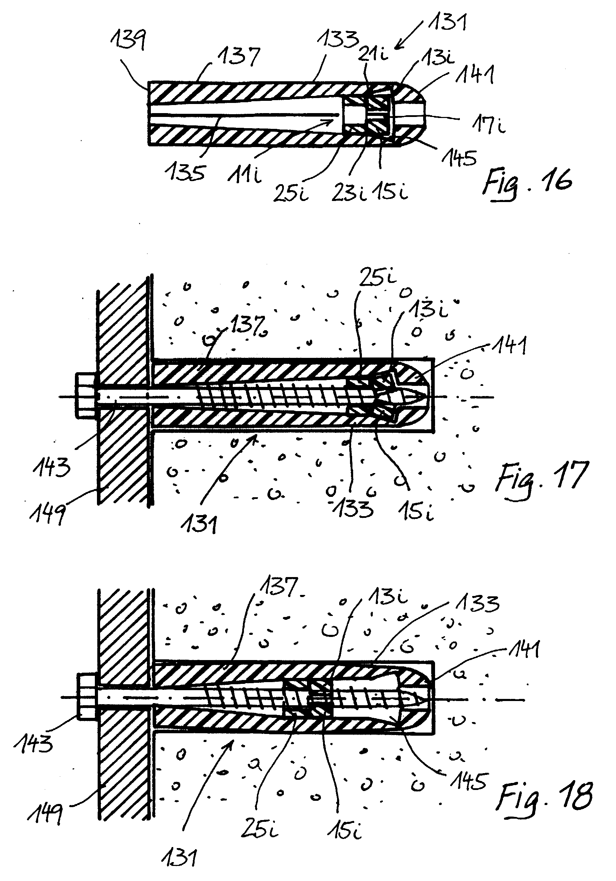

Beim Dübel 131 in den Figuren 16 bis 18 ist ein anderes Prinzip angewandt. Dieser Dübel 131 besitzt einen Mantel 133, in dessen Innern ein Gegenstück 11i in Längsrichtung gleiten kann. Der Mantel bildet ein Rohr wobei das Rohr mehrere Schlitze 135 aufweist und seine Wandung 137 gegen das Führungsende 139 dicker ist als gegen den Spitz 141 des Dübels 131. Am Spitz 141 bildet der Mantel einen Kragen, welcher verhindert, dass das Gegenstück 11i beim Einstecken der Schraube 143 nach vorne aus dem Mantel 133 hinausgestossen wird.

Das Gegenstück 11i, welches mit oder ohne Gewinde gefertigt sein kann, weist einen Ringteil 25i und über Filmscharniere 21i,23i daran befestigte Backen 13i,15i auf. Damit die Backen 13i,15i aufgespreizt werden können ist nahe des Kragens des Mantels dank einer sehr dünnen Wandung 137 eine Ausweitung 145 des Innenraums ausgeformt. In diese Ausweitung 145 weichen die Backen 13i,15i aus, um der Schraube 143 eine genügende Durchgangsweite zu eröffnen.

Das Gegenstück 11i funktioniert wie beispielsweise das Gegenstück 11h. Beim Anziehen oder Zurückziehen der eingesteckten Schraube 143 wird das Gegenstück im Mantel 133 gegen das Führungsende 139 verschoben. Da mit zunehmender Annäherung an das Führungsende 139 die Wandstärke des Mantels 133 zunimmt, wird der Mantel mehr und mehr gegen die Wandung 147 des Bohrloches gepresst. Dadurch wird der Dübel im Loch verklemmt. Die Schraube 143 kann daher nicht mehr aus dem Loch hinausgezogen werden. Zudem ist sie durch das Führungsende 139 einigermassen zentriert. Ein Gegenstand 149 kann so festgeschraubt werden.

## Patentansprüche

1. Gegenstück (11a-k) zu einer Schraube, insbesondere Mutter, mit einer Öffnung (17a-k) für den Gewindeabschnitt der Schraube, dadurch gekennzeichnet, dass das Gegenstück (11a-k) wenigstens zwei Backen (13a-i,15a-k) aufweist, welche zusammen die Öffnung (17a-k) bilden, dass die Backen (13a-k,15a-k) mit einem Ringteil (25a-i) auf einer Öffnungsseite verbunden sind, und dass die Backen (13a-k,15a-k) verschwenkbar sind.

2. Gegenstück nach Anspruch 1, dadurch gekennzeichnet, dass beim Anziehen einer von der Ringteilseite in die Öffnung (17a-k) eingeführten Schraube der Vektor der von der Schraube auf eine Backe (13a-k,15a-k) wirkenden Kraft mit Abstand zur Schwenkachse auf der Seite der Öffnung (17a-k) an der Schwenkachse vorbei gerichtet ist, so dass die Kraft einer die Öffnung (17a-k) vergrössernden Verschwenkung der Backen (13a-k,15a-k) entgegenwirkt.

3. Gegenstück nach Anspruch 1 oder 2, dadurch gekennzeichnet, dass das Ringteil (25b,c,e,k) das ringteilseitige Ende der Backen (13b,c,e,k,15b,c,e,k) umfasst und/oder die Backen (13d,g,15d,g) mit einem konischen Teil (61) in einem Konus (59) im Ringteil (25d,g) sitzen.

4. Gegenstück nach einem der Ansprüche 1 bis 3, dadurch gekennzeichnet, dass ein Scharnier (21a-k,23a-k) zwischen dem Ringteil (25a-i)und den Backen (13a-i,15a-i) oder im Ringteil (25k) angeordnet ist.

5. Gegenstück nach Anspruch 4, dadurch gekennzeichnet, dass das die Schwenkbewegung erlaubende Scharnier ein Bandscharnier (21a-e,f,g,h,k,23a-e,f,g,h,k) oder ein Filmscharnier (21i,23i) ist.

6. Gegenstück nach Anspruch 5, dadurch gekennzeichnet, dass die Backen(13a-c,g-i,15a-c,g-i), das Scharnier (21a-c,g-i,23a-c,g-i) und das Ringteil (25a-c,g-i) einteilig hergestellt sind.

7. Gegenstück nach einem der Ansprüche 1 bis 5, dadurch gekennzeichnet, dass das Gegenstück (11d,e,k) aus wenigsten zwei Backenteilen (13d,e,k,15d,e,k) und einem Ringteil (25d,e,k) zusammengestellt sind, und zwischen dem Ringteil (25d,e) und den Backen (13d,e,15d,e) oder im Ringteil (25k) Scharniere (21d,e,23d,e,24k) ausgebildet sind.

8. Gegenstück nach einem der Ansprüche 1 bis 7, dadurch gekennzeichnet, dass das Ringteil (25d) Teil eines zu befestigenden Gegenstandes (51) ist und die Backen (13d,15d) direkt am Gegenstand (51) befestigt sind.

9. Gegenstück nach einem der Ansprüche 1 bis 8, dadurch gekennzeichnet, dass der Innendurchmesser der Öffnung (17h,i) etwa dem Gewindekern der Schraube entspricht und die Backen (13h,i,15h,i) aus einem Material bestehen, in welches mit einer Schraube das Innengewinde geschnitten werden kann.

10. Gegenstück nach einem der Ansprüche 1 bis 8, dadurch gekennzeichnet, dass die Öffnung (17a-g,k) mit einem Innengewinde (19a-g,k) versehen ist, welches auf die einzuschraubende Schraube abgestimmt ist.

11. Gegenstück nach einem der Ansprüche 1 bis 10, gekennzeichnet durch Federmittel (33,21a-e,g,h,k,23a-e,g,h,k) welche die Backen zur Achse der Öffnung (17a-e,g,h,k) drücken.

12. Dübel mit einem durch Anziehen einer Schraube im Dübel (121,131) spreizbaren Spreizteil (125,137), gekennzeichnet durch ein Gegenstück (11h,i) nach einem der Ansprüche 1 bis 10, in welches zum Spreizen des Dübels eine Schraube einschraubbar ist.

13. Dübel (121) nach Anspruch 12, dadurch gekennzeichnet, dass das Spreizteil (125) am Ringteil (25h) gegenüber den Backen (13h,15h) angeordnet ist.

14. Dübel (131) nach Anspruch 12, dadurch gekennzeichnet, dass das Spreizteil (137) um das Gegenstück (11i) angeordnet ist und das Gegenstück (11i) darin verschieblich angeordnet ist, und dass die Wandung (137) des Spreizteils eine in einer Richtung zunehmende Dicke aufweist, so dass beim Anziehen einer Schraube im Dübel (131) das Gegenstück (11i) sich in den Bereich mit dickerer Wandung verschiebt.

15. Rohrschelle mit einem z.B. an einer Wand befestigbaren Basisteil (99) und einem mit diesem verschraubbaren Klemmteil (101), gekennzeichnet durch ein Gegenstück nach einem der Ansprüche 1 bis 11, welches mit einer Schraube zusammenwirkt.

16. Rohrschelle nach Anspruch 15, dadurch gekennzeichnet, dass wenigsten ein Gegenstück (11a,b) am Basisteil (99) oder Klemmteil (101) angeordnet ist.

17. Rohrschelle nach Anspruch 16, dadurch gekennzeichnet, dass am Ringteil (25a) des Gegenstücks (11a) ein Fortsatz (31) zum Einstecken in ein entsprechendes Loch im Basis- (99) oder Klemmteil (101) ausgebildet ist, wobei der Fortsatz (31) und das Loch Umrisse aufweisen, welche Drehkräfte um die Achse der Öffnung (17a) auf das Basisteil (99) bzw. Klemmteil (101) übertragen.
